# EUROPÄISCHE PATENTSCHRIFT

(11) **EP 1 045 770 B1**
(45) Veröffentlichungstag und Bekanntmachung des Hinweises auf die Patenterteilung: **06.02.2002**
(21) Anmeldenummer: 98965843.0
(22) Anmeldetag: 16.12.1998
(51) Int. Cl.: B60J 7/12

(54) **HYDRAULISCHE ANLAGE FÜR EIN EIN AUFKLAPPBARES VERDECK AUFWEISENDES KRAFTFAHRZEUG**
HYDRAULIC SYSTEM FOR A MOTOR VEHICLE HAVING A HINGED CONVERTIBLE TOP
SYSTEME HYDRAULIQUE POUR AUTOMOBILE PRESENTANT UN TOIT REPLIABLE

(30) Priorität: 14.01.1998 DE 19800985
(43) Veröffentlichungstag der Anmeldung: 25.10.2000
(73) Patentinhaber: Siemens Aktiengesellschaft, 80333 München (DE)
(72) Erfinder: BAUMERT, Jochen, D-60489 Frankfurt (DE); KERN, Eckhart, D-65719 Hofheim (DE)
(74) Vertreter: Rassler, Andrea, Dipl.-Phys.
(86) Internationale Anmeldenummer: EP9808250
(87) Internationale Veröffentlichungsnummer: WO9936282

(56) Entgegenhaltungen:
- EP-A- 0 693 390
- DE-U- 9 000 577

## Beschreibung

Die Erfindung betrifft eine hydraulische Anlage für ein ein aufklappbares Verdeck aufweisendes Kraftfahrzeug mit einer von einer Hydraulikpumpe betätigbaren Verdecksteuerung, siche EP-A-0 693 390 oder DE-U-9000577.5

Solche hydraulischen Anlagen werden bei heutigen als Cabriolets bezeichneten Kraftfahrzeugen häufig eingesetzt und sind aus der Praxis bekannt. Aus Sicherheitsgründen läßt sich das Verdeck nur bei Stillstand oder bei einer geringen Geschwindigkeit des Kraftfahrzeuges von beispielsweise weniger als 10 km/h öffnen oder schließen. Die weiteren in dem Kraftfahrzeug angeordneten Steuereinrichtungen dienen beispielsweise zum Ansteuern von regelbaren Federbeinen, einer Getriebesteuerung oder einer Hinterachszusatzlenkung. Diese hydraulischen Steuereinrichtungen werden bei bekannten Kraftfahrzeugen über eigene hydraulische Kreisläufe und zusätzlich im Kraftfahrzeug angeordnete Hydraulikpumpen oder Druckspeicher angesteuert.

Der Erfindung liegt das Problem zugrunde, eine hydraulische Anlage der eingangs genannten Art so zu gestalten, daß sie möglichst einfach aufgebaut und kostengünstig herstellbar ist.

Dieses Problem wird erfindungsgemäß dadurch gelöst, daß in einer zu der Verdecksteuerung führenden Hydraulikleitung ein schaltbares Hydraulikventil zum Ansteuern einer weiteren hydraulischen Steuereinrichtung zur Betätigung einer weiteren Funktionseinheit des Kraftfahrzeuges angeordnet ist.

In einer Ausgestaltung sind die Verdecksteuerung und die weitere hydraulische Steuereinrichtung gleichzeitig zugeschaltet, wobei sich die Leistungsaufnahme von Verdecksteuerung und Steuereinrichtung deutlich unterscheiden. Alternativ dazu ist die weitere hydraulische Steuereinrichtung nur bei abgeschalteter Verdecksteuerung ansteuerbar.

Durch diese Gestaltung wird die erfindungsgemäße hydraulische Anlage bei Nichtgebrauch der Verdecksteuerung zum Ansteuern der weiteren hydraulischen Steuereinrichtungen verwendet. Da beide Einrichtungen annähernd den gleichen Leistungsbedarf aufweisen, sind für die erfindungsgemäße Anlage keine Anpassungen der Hydraulikpumpe erforderlich. Hierdurch ist die erfindungsgemäße hydraulische Anlage besonders einfach aufgebaut und kostengünstig herstellbar. Da dank der Erfindung jeweils entweder die Verdecksteuerung oder eine der weiteren hydraulischen Einrichtungen ansteuerbar sind, entstehen keine Druckschwankungen in den Hydraulikleitungen. Deshalb ist kein oder nur ein kleiner Druckspeicher als Puffer für einen Betrieb der weiteren Steuereinrichtungen erforderlich. Dies führt zu einer weiteren Verringerung des konstruktiven Aufbaus der erfindungsgemäßen Anlage.

Die erfindungsgemäße Anlage erfordert einen besonders geringen konstruktiven Aufbau, wenn eine Steuerelektronik der Hydraulikpumpe zum Ansteuern des Hydraulikventils vorgesehen ist. Weiterhin läßt sich durch die gleichzeitige Ansteuerung der Hydraulikpumpe und des Hydraulikventils für jede der hydraulischen Steuereinrichtungen ein vorgesehenes Druckniveau erzeugen.

Eine gegenseitige Beeinflussung zweier weiterer Steuereinrichtungen läßt sich gemäß einer anderen vorteilhaften Weiterbildung der Erfindung vermeiden, wenn die Hydraulikpumpe zum Fördern von Hydrauliköl in beide Richtungen ausgebildet und in jeder der zu der Verdecksteuerung führenden Hydraulikleitungen ein Hydraulikventil angeordnet ist.

Eine Vielzahl von hydraulischen Steuereinrichtungen läßt sich gemäß einer anderen vorteilhaften Weiterbildung der Erfindung mit besonders geringem Aufwand einfach betreiben, wenn in einer der zu der Verdecksteuerung führenden Hydraulikleitungen mehrere Abzweigungen zu den hydraulischen Steuereinrichtungen angeordnet sind. Sollen bestimmte hydraulische Steuereinrichtungen nur separat ansteuerbar sein, kann dies über weitere, von der Steuerelektronik schaltbare Hydraulikventile erreicht werden.

Bei parallel ansteuerbaren hydraulischen Steuereinrichtungen läßt sich ein Druckabfall in einer der hydraulischen Steuereinrichtungen beim Zuschalten einer weiteren hydraulischen Steuereinrichtung einfach vermeiden, wenn zwischen den Abzweigungen und den Steuereinrichtungen jeweils ein Rückschlagventil angeordnet ist. Durch die Rückschlagventile wird ein Abfließen des Hydrauliköls aus der zuerst angesteuerten hydraulischen Steuereinrichtung zuverlässig vermieden.

Mehrere hydraulische Steuereinrichtungen, die im wesentlichen gleichzeitig denselben Volumenstrom an Hydrauliköl benötigen, lassen sich gemäß einer anderen vorteilhaften Weiterbildung der Erfindung mit einer geringen Anzahl an Hydraulikleitungen betreiben, wenn eine Hydraulikleitung als Rücklaufleitung einer der hydraulischen Steuereinrichtungen und als Vorlaufleitung einer weiteren hydraulischen Steuereinrichtung gestaltet ist.

Eine Vielzahl von hydraulischen Steuereinrichtungen läßt sich gemäß einer anderen vorteilhaften Weiterbildung der Erfindung ohne gegenseitige Beeinflussung betreiben, wenn in einer der Hydraulikleitungen hintereinander mehrere, jeweils hydraulische Steuereinrichtungen ansteuernde Hydraulikventile angeordnet sind, wobei jedes der Hydraulikventile als Wechselventil gestaltet ist. Durch diese Gestaltung werden bei einer Ansteuerung einer der Hydraulikpumpe nahe angeordneten hydraulischen Steuereinrichtung automatisch alle weiter entfernt angeordneten hydraulischen Steuereinrichtungen abgeschaltet. Hierdurch ist jeder der hydraulischen Steuereinrichtungen eine Priorität zugeordnet. Damit läßt sich die Verdecksteuerung der Hydraulikpumpe am nächsten anordnen und beispielsweise die hydraulische Steuereinrichtung für die Hinterradlenkung an zweiter Stelle.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Figur 1: eine schematische Darstellung einer erfindungsgemäßen hydraulischen Anlage mit einer Verdecksteuerung und zwei Steuereinrichtungen,
- Figur 2 - 5: weitere Ausführungsformen der erfindungsgemäßen hydraulischen Anlage.

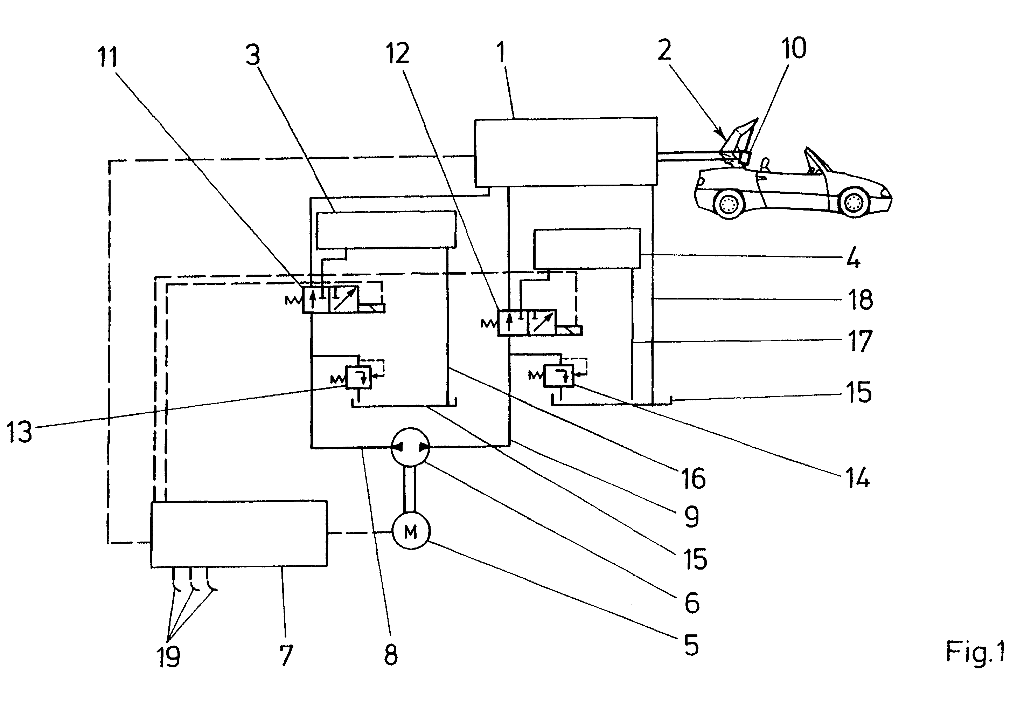

Die Figur 1 zeigt eine erfindungsgemäße hydraulische Anlage mit einer Verdecksteuerung 1 zum Öffnen und Schließen eines Verdecks 2 eines Kraftfahrzeuges und mit zwei weiteren hydraulischen Steuereinrichtungen 3, 4. Die hydraulische Anlage hat eine von einem Elektromotor 5 in beide Richtungen antreibbare Hydraulikpumpe 6 und eine Steuerelektronik 7.

Mit der Steuerelektronik 7 läßt sich die Förderrichtung und das Fördervolumen der Hydraulikpumpe 6 steuern. Von der Hydraulikpumpe 6 führen zwei Hydraulikleitungen 8, 9 zu der Verdecksteuerung 1. Die Verdecksteuerung 1 hat einen an dem Verdeck 2 des Kraftfahrzeuges angelenkten Hydraulikzylinder 10. Zur Vereinfachung der Zeichnung ist ein einziger Hydraulikzylinder 10 eingezeichnet. In den Hydraulikleitungen 8, 9 sind jeweils von der Steuerelektronik 7 elektrisch schaltbare Hydraulikventile 11, 12 angeordnet, mit denen sich die hydraulischen Steuereinrichtungen 3, 4 ansteuern lassen. Weiterhin zeigt Figur 1, daß in den Hydraulikleitungen 8, 9 Überdruckventile 13, 14 angeordnet sind, die mit einem gemeinsamen Vorratsbehälter 15 verbunden sind. Von der Verdecksteuerung 1 und den hydraulischen Steuereinrichtungen 3, 4 führen jeweils Rücklaufleitungen 16 - 18 in den Vorratsbehälter 15.

Die Hydraulikventile 11, 12 sind als Wechselventile ausgebildet und in der eingezeichneten Grundstellung in eine die Ansteuerung des Verdecks 2 ermöglichende Stellung vorgespannt. Da die hydraulischen Steuereinrichtungen 3, 4 jeweils an einer der Hydraulikleitungen 8, 9 angeschlossen sind, ist entsprechend der Förderrichtung der Hydraulikpumpe 6 jeweils nur eine der hydraulischen Steuereinrichtungen 3, 4 ansteuerbar. Von der Steuerelektronik 7 führen elektrische Signalleitungen 19 zu nicht dargestellten Schaltern und Meßeinrichtungen. Bei den Meßeinrichtungen kann es sich beispielsweise um einen Tachometer des Kraftfahrzeuges handeln. Hierdurch kann beispielsweise oberhalb einer vorgesehenen Geschwindigkeit des Kraftfahrzeuges die Verdecksteuerung 1 von der Steuerelektronik 7 gesperrt werden.

Bei den hydraulischen Steuereinrichtungen 3, 4 kann es sich beispielsweise um eine Niveauregulierung von Federbeinen des Kraftfahrzeuges handeln. Hierdurch kann mit der erfindungsgemäßen Anlage ein Ausgleich des Federweges oder einer Radlastdifferenz bei Beladung oder das Heben und Senken des Kraftfahrzeuges beispielsweise in Abhängigkeit von dessen Geschwindigkeit vorgenommen werden.

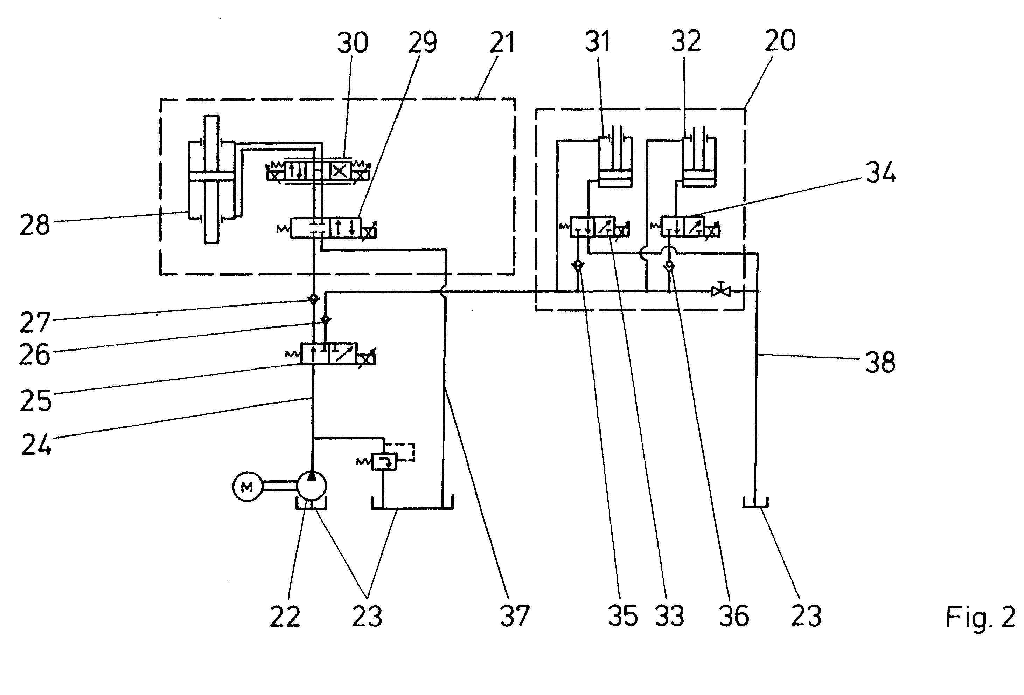

Die Figur 2 zeigt eine weitere Ausführungsform der erfindungsgemäßen hydraulischen Anlage mit einer Verdecksteuerung 1 und mit einer hydraulischen Steuereinrichtung 2 für eine Hinterradlenkung des Kraftfahrzeuges. Die erfindungsgemäße Anlage hat eine Hydraulikpumpe 22, die Hydrauliköl aus einem Vorratsbehälter 23 ansaugt und über eine Hydraulikleitung 24 zu einem schaltbaren Hydraulikventil 25 fördert. Das Hydraulikventil 25 weist zur wahlweisen Ansteuerung der Verdecksteuerung 20 und der Steuereinrichtung 21 für die Hinterradlenkung zwei Schaltstellungen auf. Zwischen dem Hydraulikventil 25 und der Verdecksteuerung 20 sowie der Steuereinrichtung 21 für die Hinterradlenkung sind jeweils Rückschlagventile 26, 27 angeordnet. Diese Rückschlagventile 26, 27 verhindern das Zurückfließen von Hydrauliköl über die Hydraulikpumpe 22 in den Vorratsbehälter 23. Die hydraulische Steuereinrichtung 21 der Hinterradlenkung hat einen doppeltwirkenden Differentialzylinder 28, der über zwei elektrisch schaltbare Ventile 29, 30 ansteuerbar ist. Die Verdecksteuerung 20 weist zwei Hydraulikzylinder 31, 32 auf, die jeweils mittels schaltbaren Ventilen 33, 34 und Rückschlagventilen 35, 36 ansteuerbar sind. Weiterhin zeigt Figur 2, daß die Verdecksteuerung 20 und die Steuereinrichtung 21 für die Hinterradlenkung jeweils über Rücklaufleitungen 37, 38 mit dem Vorratsbehälter 23 verbunden sind.

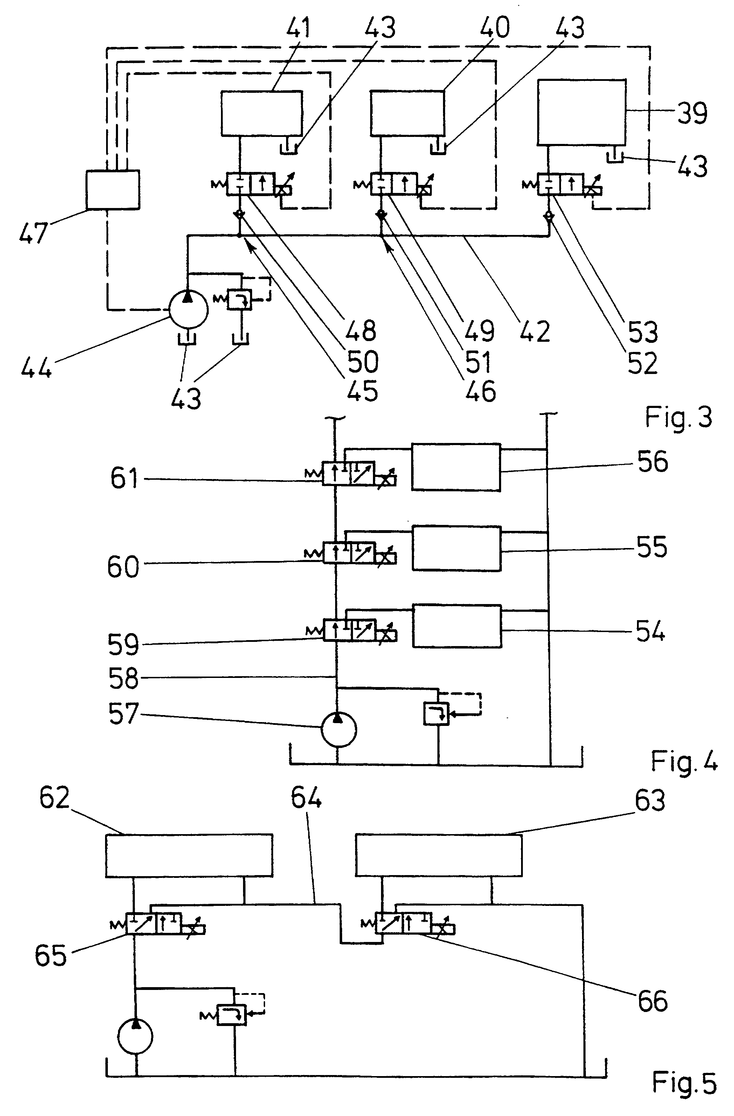

Die Figur 3 zeigt eine weitere Ausführungsform der erfindungsgemäßen hydraulischen Anlage mit einer Verdecksteuerung 39 und zwei weiteren Steuereinrichtungen 40, 41. Die Verdecksteuerung 39 ist über eine Hydraulikleitung 42 mit einer Hydrauliköl aus einem Vorratsbehälter 43 fördernden Hydraulikpumpe 44 verbunden. In der Hydraulikleitung 42 sind mehrere Abzweigungen 45, 46 für die Steuereinrichtungen 40, 41 angeordnet. Zwischen den Steuereinrichtungen 40, 41 und den Abzweigungen 45, 46 sind von einer gemeinsamen Steuerelektronik 47 ansteuerbare Hydraulikventile 48, 49 und jeweils ein Rückschlagventil 50, 51 angeordnet. Die Verdecksteuerung 39 hat ebenfalls ein Rückschlagventil 52 und ein ansteuerbares Hydraulikventil 53. Die Steuerelektronik 47 dient dazu, die Hydraulikventile 48, 49, 53 so zu schalten, daß die Verdecksteuerung 39 und die beiden Steuereinrichtungen 40, 41 gleichzeitig betrieben werden können.

Bei den Steuereinrichtungen 40, 41 kann es sich beispielsweise um ein regelbares Differential der Antriebsachse des Kraftfahrzeuges oder um eine hydraulische Unterstützung für ein nicht dargestelltes Schaltgetriebe handeln. Weiterhin können die Steuereinrichtungen 40, 41 zur hydraulischen Unterstützung einer nicht dargestellten Kupplung des Kraftfahrzeuges ausgebildet sein. Solche Steuereinrichtungen 40, 41 benötigen einen geringen Volumenstrom an Hydrauliköl, so daß eine gegenseitige Beeinflussung der beiden Steuereinrichtungen 40, 41 bei deren gleichzeitigen Betrieb nicht zu befürchten ist.

Die Figur 4 zeigt eine weitere Ausführungsform der erfindungsgemäßen hydraulischen Anlage, mit einer Verdecksteuerung 54 und zwei weiteren Steuereinrichtungen 55, 56. Die erfindungsgemäße Anlage hat eine Hydraulikpumpe 57 und mehrere, in einer Hydraulikleitung 58 hintereinander angeordnete Hydraulikventile 59 - 61. Die Hydraulikventile 59 - 61 sind jeweils als Wechselventil mit zwei Schaltstellungen gestaltet, so daß entweder die an dem jeweiligen Hydraulikventil 59 - 61 angeschlossene Steuereinrichtung 55, 56, bzw. die Verdecksteuerung 54 oder das nachfolgende Hydraulikventil 59 - 61 mit der Hydraulikpumpe 57 verbunden ist. Hierdurch kann durch entsprechendes Schalten der Hydraulikventile 59-61 jeweils nur die Verdecksteuerung 54 oder nur eine der Steuereinrichtungen 55, 56 betrieben werden.

Die Steuereinrichtungen 55, 56 können beispielsweise zum Verstellen von aerodynamischen Bauteilen des Kraftfahrzeuges in Abhängigkeit von der Geschwindigkeit des Kraftfahrzeuges oder zur Verstellung eines Kühlers oder von Anströmblenden für den Kühler des Kraftfahrzeuges in Abhängigkeit von dem Kühlluftbedarf ausgebildet sein. Weiterhin können die Steuereinrichtungen 55, 56 zum Verstellen von Fahrzeugsitzen oder zum Verriegeln von Fahrzeugtüren oder zum Aktivieren einer Feststellbremse dienen.

Die Figur 5 zeigt eine weitere Ausführungsform der erfindungsgemäßen hydraulischen Anlage mit einer Verdecksteuerung 62 und einer hydraulischen Steuereinrichtung 63. Eine Hydraulikleitung 64 ist hierbei als Rücklaufleitung der Verdecksteuerung 62 und gleichzeitig als Vorlaufleitung der Steuereinrichtung 63 gestaltet. Weiterhin hat die hydraulische Anlage zwei Hydraulikventile 65, 66, mittels derer die Steuereinrichtung 63 und die Verdecksteuerung 62 jeweils angesteuert oder überbrückt werden können.

Bei der Steuereinrichtung 63 handelt es sich beispielsweise um eine Steuereinrichtung für Kopfstützen, die nur eine geringe Druckdifferenz aufbaut.

## Patentansprüche

1. Hydraulische Anlage für ein ein aufklappbares Verdeck (2) aufweisendes Kraftfahrzeug mit einer von einer Hydraulikpumpe betätigbaren Verdecksteuerung, **dadurch gekennzeichnet, daß** in einer zu der Verdecksteuerung (1, 20, 39, 54, 62) führenden Hydraulikleitung (8, 9, 24, 42, 58, 64) ein schaltbares Hydraulikventil (11, 12;25; 48, 49; 59-61;65) zum Ansteuern einer weiteren hydraulischen Steuereinrichtung (3, 4, 21, 40, 41, 55, 56, 63) zur Betätigung einer weiteren Funktionseinheit des Kraftfahrzeuges angeordnet ist.

2. Hydraulische Anlage nach Anspruch 1, **dadurch gekennzeichnet, daß** die Verdecksteuerung (1, 20, 39, 54, 62) und die weitere hydraulische Steuereinrichtung (3, 4, 21, 40, 41, 55, 56, 63) gleichzeitig zugeschaltet sind.

3. Hydraulische Anlage nach Anspruch 1, **dadurch gekennzeichnet, daß** die weitere hydraulische Steuereinrichtung (3, 4, 21, 40, 41, 55, 56, 63) bei abgeschalteter Verdecksteuerung ansteuerbar ist.

4. Hydraulische Anlage nach Anspruch 1, 2 oder 3, **dadurch gekennzeichnet, daß** eine Steuerelektronik (7, 47) der Hydraulikpumpe (6, 44) zum Ansteuern des Hydraulikventils (11, 12, 48, 49, 53) vorgesehen ist.

5. Hydraulische Anlage nach einem der Ansprüche 1 bis 4, **dadurch gekennzeichnet, daß** die Hydraulikpumpe (7) zum Fördern von Hydrauliköl in beide Richtungen ausgebildet und in jeder der zu der Verdecksteuerung (1) führenden Hydraulikleitungen (8, 9) ein Hydraulikventil (11, 12) angeordnet ist.

6. Hydraulische Anlage nach zumindest einem der vorhergehenden Ansprüche, **dadurch gekennzeichnet, daß** in einer der zu der Verdecksteuerung (39) führenden Hydraulikleitungen (42) mehrere Abzweigungen (45, 46) zu den hydraulischen Steuereinrichtungen (40, 41) angeordnet sind.

7. Hydraulische Anlage nach zumindest einem der vorhergehenden Ansprüche, **dadurch gekennzeichnet, daß** zwischen den Abzweigungen (45) und den Steuereinrichtungen (40, 41) jeweils ein Rückschlagventil (50, 51) angeordnet ist.

8. Hydraulische Anlage nach zumindest einem der vorhergehenden Ansprüche, **dadurch gekennzeichnet, daß** eine Hydraulikleitung (64) als Rücklaufleitung einer der hydraulischen Steuereinrichtungen (Verdecksteuerung 62) und als Vorlaufleitung einer weiteren hydraulischen Steuereinrichtung (63) gestaltet ist.

9. Hydraulische Anlage nach zumindest einem der vorhergehenden Ansprüche, **dadurch gekennzeichnet, daß** in einer der Hydraulikleitungen (58) hintereinander mehrere, jeweils hydraulische Steuereinrichtungen (Verdecksteuerung 54, 55, 56) ansteuernde Hydraulikventile (59 - 61) angeordnet sind, wobei jedes der Hydraulikventile (59 - 61) als Wechselventil gestaltet ist.

## Claims

1. Hydraulic system for a motor vehicle having a fold-back-type folding top (2) with a folding-top controlling means which can be actuated by a hydraulic pump, **characterized in that** a switchable hydraulic valve (11, 12; 25; 48, 49; 59-61; 65) is arranged in a hydraulic line (8, 9, 24, 42, 58, 64) leading to the folding-top controlling means (1, 20, 39, 54, 62) and is intended for activating a further hydraulic control device (3, 4, 21, 40, 41, 55, 56, 63) for the actuation of a further functional unit of the motor vehicle.

2. Hydraulic system according to Claim 1, **characterized in that** the folding-top controlling means (1, 20, 39, 54, 62) and the further hydraulic control device (3, 4, 21, 40, 41, 55, 56, 63) are switched on at the same time.

3. Hydraulic system according to Claim 1, **characterized in that** the further hydraulic control device (3, 4, 21, 40, 41, 55, 56, 63) can be activated with the folding-top controlling means switched off.

4. Hydraulic system according to Claim 1, 2 or 3, **characterized in that** control electronics (7, 47) of the hydraulic pump (6, 44) are provided for activating the hydraulic valve (11, 12, 48, 49, 53).

5. Hydraulic system according to one of Claims 1 to 4, **characterized in that** the hydraulic pump (7) is designed for delivering hydraulic oil in both directions, and a hydraulic valve (11, 12) is arranged in each of the hydraulic lines (8, 9) leading to the folding-top controlling means (1).

6. Hydraulic system according to at least one of the preceding claims, **characterized in that** a plurality of branches (45, 46) to the hydraulic control devices (40, 41) are arranged in one of the hydraulic lines (42) leading to the folding-top controlling means (39).

7. Hydraulic system according to at least one of the preceding claims, **characterized in that** a respective non-return valve (50, 51) is arranged between the branches (45) and the control devices (40, 41).

8. Hydraulic system according to at least one of the preceding claims, **characterized in that** one hydraulic line (64) is designed as a return line for one of the hydraulic control devices (folding-top controlling means 62) and is a forward-flow line for a further hydraulic control device (63).

9. Hydraulic system according to at least one of the preceding claims, **characterized in that** a plurality of hydraulic valves (59-61) which each activate hydraulic control devices (folding-top controlling means 54, 55, 56) are arranged one behind another in one of the hydraulic lines (58), each of the hydraulic valves (59-61) being designed as a shuttle valve.

## Revendications

1. Installation hydraulique pour un véhicule automobile présentant une capote rabattable (2), avec une commande de capote apte à être actionnée par une pompe hydraulique, **caractérisée en ce que** dans un conduit hydraulique (8, 9, 24, 42, 58, 64) conduisant à la commande de capote (1, 20, 39, 54, 62) est disposée une vanne et hydraulique commutable (11, 12; 25; 48, 49; 59 - 61; 65) pour la commande d'un autre dispositif hydraulique de commande (3, 4, 21, 40, 41, 55, 56, 63) servant à actionner une autre unité fonctionnelle du véhicule automobile.

2. Installation hydraulique selon la revendication 1, **caractérisée en ce que** la commande de capote (1, 20, 39, 54, 62) et l'autre dispositif hydraulique de commande (3, 4, 21, 40, 41, 55, 56, 63) sont branchées simultanément.

3. Installation hydraulique selon la revendication 1, **caractérisée en ce que** l'autre dispositif hydraulique de commande (3, 4, 21, 40, 41, 55, 56, 63) peut être commandé lorsque la commande de capote est débranchée.

4. Installation hydraulique selon la revendication 1, 2 ou 3, **caractérisée en ce qu'**une électronique de commande (7, 47) de la pompe hydraulique (6, 44) est prévue pour la commande de la vanne hydraulique (11, 12, 48, 49, 53).

5. Installation hydraulique selon l'une des revendications 1 à 4, **caractérisée en ce que** la pompe hydraulique (7) est configurée pour transporter l'huile hydraulique dans les deux directions, et **en ce qu'**une vanne hydraulique (11, 12) est disposée dans chacun des conduits hydrauliques (8, 9) conduisant à la commande de capote (1).

6. Installation hydraulique selon au moins l'une des revendications précédentes, **caractérisée en ce que** plusieurs dérivations (45, 46) conduisant au dispositif hydraulique de commande (40, 41) sont disposées dans l'un des conduits hydrauliques (42) qui conduit à la commande de capote (39).

7. Installation hydraulique selon au moins l'une des revendications précédentes, **caractérisée en ce qu'**un clapet antiretour (50, 51) est disposé entre les dérivations (45) et chacun des dispositifs de commande (40, 41).

8. Installation hydraulique selon au moins l'une des revendications précédentes, **caractérisée en ce qu'**un conduit hydraulique (64) est configuré comme conduit de retour de l'un des dispositifs hydrauliques de commande (commande de capote 62) et comme conduit de départ d'un autre dispositif hydraulique de commande (63).

9. L'installation hydraulique selon au moins l'une des revendications précédentes, **caractérisée en ce que** plusieurs vannes hydrauliques (59 - 61) qui commandent chacune des dispositifs hydrauliques de commande (commande de capote 54, 55, 56) sont disposées l'une derrière l'autre dans l'un des conduits hydrauliques (58), chacune des vannes hydrauliques (59 - 61) étant configurée comme vanne alternée.
